# FASCICULE DE BREVET EUROPEEN

(11) **EP 0 965 038 B1**
(45) Date de publication et mention de la délivrance du brevet: **06.02.2002**
(21) Numéro de dépôt: 98913831.8
(22) Date de dépôt: 04.03.1998
(51) Int. Cl.: G01N 25/72

(54) **PROCEDE D'EXAMEN PHOTOTHERMIQUE D'UNE PIECE**
VERFAHREN ZUR PHOTOMETRISCHEN UNTERSUCHUNG EINES GEGENSTANDES
METHOD FOR THE INSPECTION OF A PART BY THERMAL IMAGING

(30) Priorité: 05.03.1997 FR 9702622
(43) Date de publication de la demande: 22.12.1999
(73) Titulaire: Framatome ANP, 92400 Courbevoie (FR); OFFICE NATIONAL D'ETUDES ET DE RECHERCHES AEROSPATIALES (ONERA), 92320 Chatillon sous Bagneux (FR)
(72) Inventeur: LEGRANDJACQUES, Laurent, F-21000 Dijon (FR); DEHAN, Christophe, F-78280 GUYANCOURT (FR); KRAPEZ, Jean-Claude, F-92320 Châtillon (FR); LE POUTRE, François, F-91640 Janvry (FR)
(74) Mandataire: Bouget, Lucien
(86) Numéro de dépôt international: FR9800430
(87) Numéro de publication internationale: WO9839641

(56) Documents cités:
- EP-A- 0 531 127
- US-A- 3 854 336
- US-A- 5 228 776

## Description

L'invention concerne un procédé d'examen photothermique d'une pièce pour détecter des défauts ou déterminer des caractéristiques du matériau dont est constituée la pièce, en éliminant l'effet perturbateur de variations d'émissivité et d'absorptivité sur une surface de la pièce sur laquelle on réalise l'examen.

Il est connu de réaliser la détection de défauts plans ou volumiques, de variations de matériaux ou d'épaisseurs de couches de revêtement ou encore de mesurer des gradients de diffusivité ou de conductivité thermique dans une pièce par une méthode d'examen photothermique consistant à déterminer les caractéristiques de la diffusion latérale, c'est-à-dire dans un plan parallèle à une surface de la pièce sur laquelle on réalise l'examen, d'une sollicitation thermique produite par un échauffement local de la pièce. Pour cela, on produit un échauffement d'une zone de la surface de la pièce et on détermine, en utilisant au moins un détecteur tel qu'un détecteur infrarouge, l'élévation de température produite par la diffusion latérale de la chaleur apportée dans la zone de chauffage, dans une zone de détection située à une certaine distance de la zone de chauffage, sur la surface de la pièce.

Pour déterminer les variations de la diffusion latérale dans le matériau de la pièce, représentatives de l'état de défaut de cette pièce ou de ses caractéristiques thermiques, on réalise un balayage de la surface de la pièce par un moyen d'apport de chaleur qui peut être par exemple un faisceau laser, de manière à déplacer la zone de chauffage à la surface de la pièce.

Les signaux produits par le ou les détecteurs, pendant le balayage par le moyen d'apport de chaleur, sont représentatifs de l'élévation de température à la surface de la pièce, dans une zone de détection dont la position varie simultanément avec la position de la zone de chauffage et qui est décalée d'une certaine distance par rapport à cette zone. On réalise ainsi une détermination sans contact de l'élévation de température dans la zone de détection et donc de la diffusion latérale de la chaleur dans le matériau et de ses variations.

Les signaux produits par le ou les détecteurs pendant le balayage de la pièce par le moyen d'apport de chaleur permettent de déterminer la présence de défauts sur ou en-dessous de la surface du matériau tels que des fissures ou des interfaces perpendiculaires ou parallèles à la surface de la pièce ou encore de déterminer des variations locales de diffusivité ou de conductivité thermique à la surface ou sous la surface du matériau.

L'exploitation des signaux des détecteurs par un ensemble d'exploitation comportant, par exemple, un micro-ordinateur peut permettre en particulier de fournir une image des défauts situés sur ou sous la surface de la pièce. Le dispositif comportant le moyen d'apport de chaleur, le moyen de balayage de la surface de la pièce, le ou les détecteurs et les moyens d'exploitation des signaux des détecteurs constitue alors une caméra photothermique qui peut être utilisée pour la recherche ou la caractérisation de défauts sur des pièces en des matériaux de natures très diverses.

Les dispositifs d'examen photothermique connus de la technique utilisent des dispositifs d'apport de chaleur qui réalisent un balayage de la surface de la pièce et un détecteur qui est placé de manière à recevoir le flux thermique émis par une zone de détection située à une certaine distance fixe de la zone de chauffage et qui suit le déplacement de cette zone de chauffage pendant le balayage.

Le flux rayonné par la surface du matériau dans la zone de détection dépend de l'émissivité de la surface du matériau dans la zone de détection et de la quantité de chaleur apportée dans la zone de chauffage qui, elle, dépend de l'absorptivité de la pièce dans la zone de chauffage.

Généralement, l'émissivité de la surface de la pièce à examiner varie d'une zone à une autre, c'est-à-dire varie au cours du balayage de la pièce par la source d'apport de chaleur. De même, l'absorptivité du matériau varie généralement pendant le balayage de la pièce.

Les mesures effectuées ne sont donc pas uniquement représentatives de la distribution des propriétés thermiques du matériau.

En particulier, l'image obtenue par une caméra photothermique par balayage d'une surface d'une pièce n'est généralement pas représentative de l'état de défaut de cette pièce, du fait de l'effet perturbateur des variations d'émissivité et d'absorptivité de la pièce.

Le but de l'invention est donc de proposer un procédé d'examen photothermique d'une pièce consistant à réaliser le balayage d'une surface de la pièce par un moyen d'apport de chaleur réalisant un apport de chaleur à la pièce, dans au moins une zone de chauffage qui est déplacée à la surface de la pièce, à capter avec au moins un détecteur un flux rayonné par la surface de la pièce, dans au moins une zone de détection dont la position sur la surface de la pièce varie conjointement avec la position de la zone de chauffage et à élaborer, grâce au détecteur, pour chacune des positions d'un ensemble de positions successives de la zone de détection, un signal représentatif du flux thermique rayonné par la zone de mesure, ce procédé permettant d'éliminer l'effet perturbateur de variations d'émissivité ou d'absorptivité de la pièce sur laquelle on réalise l'examen.

Dans ce but, on réalise le balayage de la surface de la pièce suivant une trajectoire déterminée, dans un premier sens de déplacement, puis dans un second sens de déplacement opposé au premier, avec une vitesse de balayage identique et, pour chacune des positions successives de la zone de détection, on élabore un signal différentiel par soustraction des signaux obtenus lors du balayage dans un sens et dans l'autre de la surface de la pièce et on détermine l'état de défaut ou les caractéristiques du matériau de la pièce, à partir des signaux différentiels obtenus.

Afin de bien faire comprendre l'invention, on va maintenant décrire, à titre d'exemple non limitatif, en se référant aux figures jointes en annexe, la mise en oeuvre du procédé d'examen photothermique suivant l'invention, en particulier pour la détection de défauts tels que des fissures dans une pièce.

La figure 1 est une vue en perspective illustrant le principe du procédé d'examen photothermique auquel s'applique l'invention.

La figure 2 est une vue schématique d'un exemple de dispositif pour la mise en oeuvre du procédé d'examen photothermique.

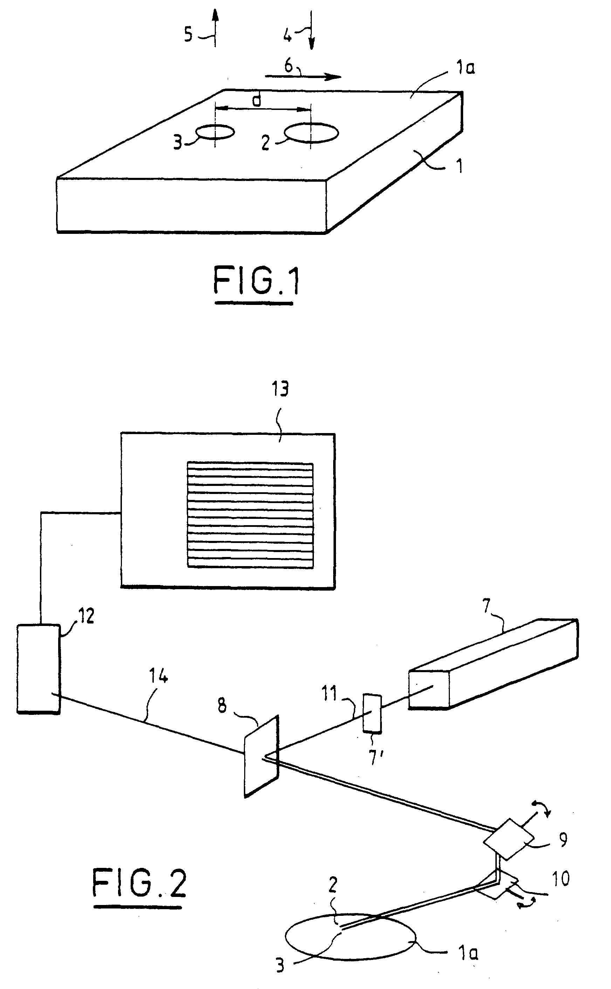

Sur la figure 1, on voit la pièce 1 constituée par le matériau, sur lequel on réalise l'examen photothermique. La pièce a été représentée sous la forme d'un parallélépipède rectangle et la surface 1a sur laquelle on réalise le balayage par le moyen d'apport de chaleur et la mesure de flux thermique, par une face plane du parallélépipède rectangle. Bien entendu, la pièce pourrait avoir toute autre forme que la forme d'un parallélépipède rectangle et la surface balayée pourrait être une surface différente d'une surface plane.

Sur la surface 1a de la pièce 1 dont on réalise l'examen photothermique, on a représenté arbitrairement sous la forme d'une zone circulaire, une zone 2 de la surface la dans laquelle on réalise un apport de chaleur à la pièce 1 constituée du matériau.

De même, on a représenté arbitrairement sous la forme d'une zone circulaire 3, la zone de détection dans laquelle on détecte le flux thermique rayonné par la pièce 1.

L'apport de chaleur dans la zone 2 est schématisé par la flèche 4 et la détection du flux thermique rayonné par la zone 3, par la flèche 5.

Les zones 2 et 3 sont espacées l'une de l'autre à la surface la de la pièce 1, la distance d'espacement d ayant été représentée sur la figure 1.

Le balayage de la surface la de la pièce 1 par le moyen d'apport de chaleur et par l'axe de visée du détecteur a été schématisé par la flèche 6.

La zone de détection 3 transmet l'information d'élévation de température, par exemple le flux thermique rayonné, vers un détecteur infrarouge.

Généralement, dans les dispositifs connus de l'art antérieur, la distance d entre la zone de chauffage et la zone de mesure est constante pendant le balayage, le flux rayonné ou l'élévation de température étant mesurés à une distance fixe de la zone de chauffage se déplaçant à la surface de la pièce. La position de la zone de mesure se déduit à chaque instant de la position de la zone de chauffage, par une translation de vecteur constant, dans une direction quelconque vis-à-vis du déplacement.

Sur la figure 2, on a représenté à titre d'exemple un dispositif de mesure permettant de réaliser l'examen photothermique d'un échantillon dont on a représenté une partie de la surface la.

Le dispositif comporte une source laser 7, un dispositif 7' d'adaptation de la distribution spatiale du flux du laser et des moyens optiques constitués par des miroirs 8, 9, 10 permettant de transmettre le faisceau laser 11 à la surface la de la pièce pour réaliser le chauffage dans une zone de chauffage 2.

Le flux rayonné dans une zone de mesure 3 est transmis par les miroirs du système optique 10, 9 à un détecteur 12 relié à un ordinateur 13 de traitement des signaux fournis par le détecteur.

Les miroirs 9, 10 de l'ensemble optique permettent d'effectuer un balayage de la surface la de l'échantillon avec le faisceau laser 11 et simultanément, de transmettre au détecteur 12 le flux rayonné dans une zone de mesure 3 de la surface la de l'échantillon située à une distance fixe de la zone de chauffage 2.

En général, on utilise un laser continu dont la distribution spatiale du faisceau 11 est adaptée à la mesure prévue ; ensuite, le faisceau du laser est focalisé sur la surface de l'échantillon. Il est parfois préférable d'utiliser un faisceau dont l'intensité est modulée dans le temps. Le détecteur infrarouge est un détecteur qui est sensible dans une gamme de longueurs d'onde dont la bande est comprise entre 0,4 à 20 µm. Les miroirs 9 et 10 sont des miroirs orientables motorisés qui sont déplacés de manière à réaliser un balayage ligne par ligne complet de la surface la de l'échantillon. Les chemins optiques du faisceau d'excitation laser 11 et du flux rayonné 14 sont colinéaires jusqu'au miroir semi-réfléchissant 8.

Le flux thermique rayonné par la zone de mesure 3 dépend de l'émissivité locale ∈ de la surface la de l'échantillon. Cette émissivité peut varier de 0 à 1 en fonction des particularités locales de la portion de surface constituant la zone de mesure à un instant donné.

Dans le cas d'un chauffage de type optique, par exemple par une source laser ou une lampe à incandescence, l'efficacité du chauffage dépend du coefficient d'absorptivité α de la portion 2 de la surface qui est chauffée à un instant donné, ce coefficient d'absorptivité pouvant varier de 0 à 1. Si la puissance incidente de la source d'excitation 7 est P₀, la puissance effectivement transmise au matériau, pour une position donnée de la zone de chauffage, est αP₀.

On utilise un repère cartésien constitué par un système d'axes Ox, Oy, pour repérer la position des points de la surface 1a de l'échantillon.

On désigne par ΔT(x, y) l'élévation de la température dans la zone de détection 3 de coordonnées x et y et S(x, y), le signal reçu par le détecteur. Si Ox est la direction de balayage, l'élévation de température ΔT(x,y) dépend des élévations de température ΔT(x-a, y) générées par le système de chauffage aux positions x-a atteintes par le système le long de la trajectoire de balayage, c'est-à-dire pour a variant de x à 0.

On peut montrer que le signal reçu par le détecteur dépend :
- de l'élévation de température ΔT(x,y) provoquée par le chauffage dans la zone de détection et par les variations de diffusivité existant dans le voisinage des zones de chauffage 2 et de détection 3. (Il est à remarquer que ΔT dépend de la vitesse et du sens de balayage et de la disposition relative des zones de chauffage 2 et de détection 3)
- des caractéristiques optiques locales de la surface à inspecter (∈ sur la zone de détection 3 et α sur la zone de chauffage 2).

Dans le cas où les variations des caractéristiques optiques à la surface 1a de la pièce 1 ne sont pas négligeables, les variations de signal observées peuvent être importantes et représenter presqu'exclusivement les variations des caractéristiques optiques au lieu de représenter les variations de diffusivité que l'on cherche à déterminer.

Le procédé suivant l'invention permet d'éliminer l'effet perturbateur de la variation des caractéristiques optiques de la surface de la pièce examinée et d'obtenir directement par exploitation des signaux des détecteurs les caractéristiques thermiques de la pièce ; à partir de ces caractéristiques, on peut alors effectuer la détection et la localisation de défauts ou encore la détermination de caractéristiques diverses du matériau de la pièce.

Il est à remarquer que le procédé selon l'invention s'applique quel que soit le type de détection utilisé ; il s'applique aussi bien lorsqu'on utilise un détecteur dans le proche infrarouge, dans le visible et dans l'ultraviolet ; il peut s'appliquer également pour d'autre détection dans le domaine de la thermoréflectivité.

Le procédé suivant l'invention consiste à réaliser le balayage de la surface de la pièce, c'est-à-dire le déplacement de la zone de chauffage 2 et de la zone de détection 3, suivant une trajectoire déterminée, d'abord dans un premier sens de déplacement, puis dans un second sens de déplacement opposé au premier avec une vitesse de balayage identique.

Par exemple, dans le cas où l'on réalise le balayage de la surface la de la pièce 1 suivant une succession de lignes parallèles entre elles ayant pour direction la direction de la flèche 6, on réalise, pour chacune des lignes de balayage, un balayage dans un premier sens (par exemple le sens de la flèche 6) et un balayage suivant la même ligne dans le sens opposé et avec la même vitesse que lors du balayage dans le premier sens.

Au cours du balayage dans le premier sens de déplacement, suivant une ligne de balayage, on capte, à la sortie du détecteur 12, des signaux successifs représentatifs du flux rayonné par la zone de détection 3 dans des positions successives suivant la ligne de balayage. Lors du balayage de la même ligne dans le second sens de déplacement, on capte, en sortie du détecteur 12, des signaux successifs représentatifs du flux thermique rayonné par la zone de détection 3 dans des positions successives qui correspondent aux positions de la zone de détection dans lesquelles on a capté des signaux de mesure lors du balayage dans le premier sens de déplacement. Les signaux de mesure représentatifs du flux rayonné par la zone de mesure 3 dans chacune des positions successives lors du balayage dans un sens et dans l'autre sont stockés dans la mémoire de l'ordinateur 13.

En effectuant une soustraction des signaux, pour obtenir dans chacun des cas un signal différentiel pour chacune des positions de la zone de mesure 3, on élimine l'effet perturbateur des caractéristiques optiques de la surface de la pièce, dû aux variations du facteur d'émissivité et du facteur d'absorptivité, suivant la surface de la pièce.

En effet, généralement ΔT(x,y) dépend du sens de balayage.

Cependant, la différence d'élévation de température lorsqu'on inverse le sens de balayage peut devenir faible voire nulle lorsqu'on est en présence uniquement de défauts optiques de la surface. Dans ce cas, ΔS(x,y) = 0.

En revanche, dans le cas de gradient de diffusivité thermique, par exemple dû à des défauts du matériau tels que des fissures, la différence d'élévation de température Δ(ΔT(x,y)) est différente de zéro.

Dans ce cas, ΔS(x,y) est différent de zéro ; on obtient donc un signal différentiel mesurable.

En déterminant, pour chacune des positions de la zone de détection, le signal différentiel ΔS(x,y) entre le signal obtenu dans un sens de balayage et le signal obtenu dans le sens opposé, on élimine donc l'influence des caractéristiques optiques de la surface de la pièce sur le signal de mesure.

Les signaux différentiels sont donc bien représentatifs des caractéristiques thermiques du matériau.

Dans le cas où l'on réalise un contrôle non destructif de la pièce par examen photothermique, on réalise une première image de la surface de la pièce à partir des signaux délivrés par le détecteur pendant le balayage de la pièce suivant une certaine trajectoire dans un premier sens de balayage, puis une seconde image à partir des signaux fournis par le détecteur lors du balayage de la surface de la pièce suivant la même trajectoire mais avec un sens de balayage opposé. On réalise ensuite une soustraction point à point des deux images pour créer une troisième image débarrassée des informations liées uniquement aux propriétés optiques de surface de la pièce inspectée.

Le balayage de la surface de la pièce peut être réalisé avec une trajectoire quelconque, par exemple constituée de lignes parallèles jointes entre elles à leurs extrémités pour constituer une trajectoire ayant une forme en créneau ou une forme de peigne.

L'acquisition des mesures correspondant aux images dans le premier sens, ou sens aller du balayage, ou dans le second sens, ou sens retour du balayage, peut être successive, c'est-à-dire qu'on effectue un balayage complet de la surface dans le sens aller puis un balayage complet de la surface dans le sens retour ou encore quasi simultanée, en effectuant l'acquisition des signaux pour la première ligne du balayage dans le sens aller puis pour la première ligne de balayage dans le sens retour, avant de passer à la seconde ligne du balayage puis à chacune des lignes de balayage successives. Dans chacun des cas, on détermine par soustraction des signaux de mesure dans chacune des positions des zones de mesure dans le sens aller et dans le sens retour, un signal différentiel.

En fonction de la nature des matériaux et des surfaces dont on réalise l'examen, le signe et la valéur du décalage spatial entre la zone de chauffage 2 et la zone de détection 3 (défini par les composants dx et dy d'un vecteur ayant pour origine la zone de chauffage et pour extrémité la zone de détection) vont être conservés ou modifiés entre le balayage aller et le balayage retour, afin de parfaire la suppression des composantes indésirables du signal.

De la même manière, on pourra modifier l'aire, la forme ou la répartition spatiale (de puissance pour l'excitation et de sensibilité pour la détection) des zones 2 et 3 entre le balayage aller et le balayage retour.

Le balayage étant réalisé suivant l'axe Ox, l'espacement dx selon cet axe est considéré comme positif si le vecteur ayant comme origine la zone de chauffage et comme extrémité la zone de détection se trouve orienté dans le sens du déplacement. L'espacement dy selon l'axe Oy est déterminé en orientant l'axe Oy de manière à passer de l'axe Ox à l'axe Oy par une rotation de 90° dans le sens anti-horaire.

On a effectué un contrôle non destructif de type classique, par ressuage, d'une pièce métallique comportant des fissures débouchantes de quelques micromètres d'ouverture. Sur le cliché obtenu, des traits sombres indiquent la position des fissures.

On a cherché à comparer le cliché à une image représentative des informations obtenues de manière habituelle, lors de la mise en oeuvre d'un dispositif d'imagerie par caméra photothermique, sans utiliser le procédé de l'invention. L'image photothermique est très fortement perturbée par l'influence des caractéristiques optiques de la surface inspectée qui est la même surface que celle de la pièce métallique sur laquelle on effectue le contrôle par ressuage. Il est donc difficile de repérer les fissures qui ont été mises en évidence par le procédé de ressuage.

On a également comparé le cliché obtenu, lors du contrôle par ressuage, à une image obtenue par une technique de caméra photothermique en mettant en oeuvre le procédé de l'invention, c'est-à-dire en réalisant un double balayage et une reconstitution de l'image à partir de signaux différentiels déterminés au moment du balayage aller et du balayage retour, dans les mêmes zones. L'image fait uniquement ressortir les fissures débouchantes de la pièce. Les résultats obtenus sont identiques aux résultats obtenus par le contrôle par ressuage, les caractéristiques optiques de la surface inspectée ayant été éliminées.

Le procédé suivant l'invention permet donc d'éliminer l'effet des inhomogénéités de nature optique de la surface dont on réalise l'examen photothermique et d'obtenir des résultats parfaitement représentatifs des variations des caractéristiques thermiques du matériau au voisinage de la surface dont on réalise le balayage. On peut ainsi visualiser directement des défauts de la surface ou situés sous la surface de la pièce dont on réalise l'examen.

Le procédé suivant l'invention s'applique à tous les dispositifs de contrôle non destructif, que ces dispositif soient utilisés pour la détection de défauts plans ou de défauts volumiques perpendiculaires ou parallèles à la surface, de variations de matériau ou d'épaisseurs de couches. Le procédé s'applique également à des dispositifs permettant la caractérisation de zones situées sur la surface ou sous une surface d'une pièce, par détermination de gradients locaux de diffusivité ou de conductivité thermique.

Les dispositifs auxquels s'applique le procédé de l'invention comportent des détecteurs permettant de déterminer sans contact l'élévation de température due à la diffusion d'une perturbation thermique produite par un échauffement local du matériau, ces dispositifs permettant de détecter ou de caractériser la présence de gradients locaux de diffusivité thermique.

Les dispositifs auxquels s'applique l'invention permettent de réaliser un déplacement synchrone, c'est-à-dire avec un espacement constant à la surface de la pièce d'une zone de chauffage 2 et d'une zone de détection 3. Le déplacement entre les zones de chauffage et de détection à la surface de la pièce peut être obtenu soit en utilisant une pièce fixe sur une surface de laquelle on déplace une zone de chauffage et une zone de détection ou encore en utilisant une pièce mobile qui est déplacée par rapport à un dispositif d'apport de chaleur fixe.

L'espacement entre la zone de chauffage et la zone de détection peut être nul, positif ou négatif, cet espacement pouvant être choisi par exemple entre 0 et 10mm.

L'espacement peut être modifié en amplitude et en signe (selon x ou y) entre le balayage aller et le balayage retour dans le but de parfaire la suppression des composantes indésirables du signal.

La forme des zones de chauffage et de détection 2 et 3 peut être quelconque et l'aire de ces zones peut être fixée à une valeur quelconque entre deux limites telles que 1 µm² et 1000 mm². L'aire de la zone de chauffage 2 peut être différente de l'aire de la zone de détection.

Pour améliorer les performances, on peut modifier l'aire et/ou la forme de la zone de chauffage et/ou de la zone de détection et/ou la répartition spatiale de puissance et/ou de sensibilité à l'intérieur des zones 2 et 3, respectivement, entre l'aller et le retour.

On peut également réaliser un apport de chaleur dans au moins deux zones de chauffage 2 et la détection des signaux de mesure dans une zone de détection située entre les zones de chauffage.

On peut aussi réaliser un apport de chaleur dans une zone annulaire et une détection de signaux de mesure dans une zone de détection située à l'intérieur de la zone de chauffage annulaire.

Le chauffage du matériau de la pièce peut être continu ou modulé dans le temps. La détection, c'est-à-dire la mesure des élévations de température dans la zone de détection à partir du flux rayonné, peut être réalisée de façon continue ou de façon synchrone avec le chauffage si celui-ci est réalisé de manière modulée. Dans tous les cas, les signaux différentiels doivent être obtenus par soustraction de deux signaux dans des positions de la zone de détection identiques, au cours du balayage aller et du balayage retour, respectivement.

Le procédé de l'invention peut s'appliquer au contrôle non destructif ou à la détermination de caractéristiques de diffusivité de pièces en un matériau quelconque. En particulier, le procédé de l'invention s'applique au repérage des fissures débouchantes sur des éléments ou composants d'un réacteur nucléaire, par exemple des liaison bimétalliques par soudage entre un premier élément et un second élément dont les compositions ou structures sont différentes, notamment des liaisons par soudage entre un élément en acier ferritique et un élément en acier austénitique ou des soudures de tuyauteries sur lesquelles on doit réaliser un contrôle par l'intérieur, ou encore des barrières thermiques de pompes primaires.

Le procédé s'applique également au repérage des fissures non débouchantes sur des surfaces ayant subi une mise en compression par martelage par des billes, par exemple des surfaces d'échange d'un générateur de vapeur ou sous un revêtement protecteur ayant une épaisseur de 0,1 à 1 mm, tel que le revêtement en acier inoxydable de certaines parties du circuit primaire d'un réacteur nucléaire refroidi par de l'eau sous pression.

## Revendications

1. Procédé d'examen photothermique d'une pièce (1) consistant à réaliser le balayage d'une surface (1a) de la pièce (1) par un moyen d'apport de chaleur (11) réalisant un apport de chaleur à la pièce (1), dans au moins une zone de chauffage (2) qui est déplacée à la surface de la pièce, à capter avec au moins un détecteur (12) le flux rayonné par la surface (1a) de la pièce (1), dans au moins une zone de détection (3) dont la position sur la surface (1a) de la pièce (1) varie conjointement avec la position de la zone de chauffage (2) et à élaborer, grâce au détecteur (12), pour chacune des positions d'un ensemble de positions successives de la zone de détection (3), un signal représentatif du flux thermique rayonné ou de l'élévation de température dans la zone de détection, **caractérisé par le fait qu'**on réalise le balayage de la surface (1a) de la pièce (1) suivant une trajectoire déterminée, dans un premier sens de déplacement, puis dans un second sens de déplacement opposé au premier, avec une vitesse de balayage identique et que, pour chacune des positions successives de la zone de détection (3), on élabore un signal différentiel par soustraction des signaux obtenus lors du balayage dans un sens et dans l'autre de la surface (1a) de la pièce (1) et qu'on détermine l'état de défaut ou les caractéristiques du matériau de la pièce (1), à partir des signaux différentiels obtenus.

2. Procédé suivant la revendication 1, **caractérisé par le fait que** la zone de chauffage (2) et la zone de détection (3) sont séparées par une distance (d) constante à la surface (1a) de la pièce (1) représentée par un vecteur dont les composantes dans un repère cartésien peuvent être positives, négatives ou nulles.

3. Procédé suivant la revendication 2, **caractérisé par le fait que** la distance (d) entre la zone de chauffage (2) et la zone de détection (3) est comprise entre 0 et 10 mm.

4. Procédé suivant l'une quelconque des revendications 2 et 3, **caractérisé par le fait que** la distance (d) d'espacement entre la zone de chauffage (2) et la zone de détection (3) est la même lors du balayage dans un sens et dans l'autre de la surface (1a) de la pièce (1).

5. Procédé suivant l'une quelconque des revendications 2 et 3, **caractérisé par le fait que** la distance (d) d'espacement entre la zone de chauffage (2) et la zone de détection (3) varie en signe ou en amplitude entre le balayage dans le premier sens de déplacement et le balayage dans le second sens de déplacement.

6. Procédé suivant l'une quelconque des revendications 1 à 5, **caractérisé par le fait que** l'aire de la zone de chauffage (2) et de la zone de détection (3) est comprise entre 1 µm² et 1000 mm².

7. Procédé suivant la revendication 6, **caractérisé par le fait que** l'aire de la zone de chauffage (2) est différente de l'aire de la zone de détection (3).

8. Procédé suivant l'une quelconque des revendications 1 à 7, **caractérisé par le fait qu'**on élabore, à partir des signaux différentiels, une image de la surface montrant des défauts du matériau tels que des fissures.

9. Procédé suivant l'une quelconque des revendications 1 à 8, **caractérisé par le fait que** le balayage de la surface (1a) de la pièce (1) est réalisé suivant une trajectoire constituée par des lignes parallèles jointes entre elles à leurs extrémités, ayant une forme en créneau ou en peigne.

10. Procédé suivant l'une quelconque des revendications 1 à 9, **caractérisé par le fait qu'**on réalise une acquisition des signaux du détecteur, dans le premier sens, au cours d'un premier balayage complet de la surface (1a) de la pièce (1), puis dans le second sens au cours d'un second balayage complet de la surface (1a) de la pièce (1).

11. Procédé suivant l'une quelconque des revendications 1 à 9, **caractérisé par le fait qu'**on réalise une acquisition des signaux du détecteur, pour chacune des lignes du balayage, dans le premier sens de balayage, puis dans le second sens de balayage de la surface (1a) de la pièce (1).

12. Procédé suivant l'une quelconque des revendications 1 à 11, **caractérisé par le fait qu'**on réalise le chauffage de la pièce (1) et la détection des signaux de manière continue.

13. Procédé suivant l'une quelconque des revendications 1 à 11, **caractérisé par le fait qu'**on réalise le chauffage de la pièce (1) et la détection des signaux de manière modulée.

14. Procédé suivant l'une quelconque des revendications 1 à 13, **caractérisé par le fait que** l'un au moins des paramètres, aire de la zone de chauffage (2) ou de la zone de détection (3), forme de la zone de chauffage (2) ou de la zone de détection (3), répartition spatiale de la puissance de chauffage, répartition spatiale de la sensibilité de détection, est modifié entre le balayage dans le premier sens de déplacement et le balayage dans le second sens de déplacement, pour améliorer le caractère significatif des signaux différentiels.

15. Procédé suivant l'une quelconque des revendications 1 à 14, **caractérisé par le fait qu'**on réalise un apport de chaleur dans au moins deux zones de chauffage (2) de la surface (1a) de la pièce (1) et la détection de signaux de mesure dans une zone de détection (3) située entre les zones de chauffage (2).

16. Procédé suivant l'une quelconque des revendications 1 à 15, **caractérisé par le fait qu'**on réalise un apport de chaleur dans une zone de chauffage annulaire (2) de la pièce (1) et la détection de signaux dans une zone de détection (3) située à l'intérieur de la zone de chauffage annulaire (2).

## Claims

1. Process for inspecting a part (1) by thermal imaging, comprising scanning a surface (1a) of the part (1) by heat-supplying means (11) which supply heat to the part (1), in at least one heating zone (2) which is moved along the surface of the part, picking up, with at least one detector (12), the flux radiated by the surface (1a) of the part (1), in at least one detection zone (3) the position of which on the surface (1a) of the part (1) varies in conjunction with the position of the heat zone (2) and forming, by means of the detector (12), for each position of a set of successive positions of the detection zone (3), a signal representing the heat flux radiated or the rise in temperature in the detection zone, **characterised in that** the surface (1a) of the part (1) is scanned along a predetermined trajectory, in a first direction of movement, then in a second direction of movement opposed to the first, at an identical scanning speed, and, for each of the successive positions of the detection zone (3), a differential signal is produced by subtracting the signals obtained during the scanning in both directions of the surface (1a) of the part (1), and the defective nature or characteristics of the material of the part (1) is determined, from the differential signals obtained.

2. Process according to claim 1, **characterised in that** the heating zone (2) and detection zone (3) are separated by a constant distance (d) from the surface (1a) of the part (1) shown by a vector the components of which in a Cartesian frame of reference may be positive, negative or zero.

3. Process according to claim 2, **characterised in that** the distance (d) between the heating zone (2) and the detection zone (3) is between 0 and 10 mm.

4. Process according to any one of claims 2 and 3, **characterised in that** the spacing distance (d) between the heating zone (2) and the detection zone (3) is the same during scanning in one or other direction of the surface (1a) of the part (1).

5. Process according to any one of claims 2 and 3, **characterised in that** the spacing distance (d) between the heating zone (2) and the detection zone (3) varies in sign or amplitude between the scanning in the first direction of movement and the scanning in the second direction of movement.

6. Process according to any one of claims 1 to 5, **characterised in that** the area of the heating zone (2) and the detection zone (3) is between 1 µm² and 1000 mm².

7. Process according to claim 6, **characterised in that** the area of the heating zone (2) is different from the area of the detection zone (3).

8. Process according to any one of claims 1 to 7, **characterised in that** an image of the surface showing any defects in the material such as cracks is built up from the differential signals.

9. Process according to any one of claims 1 to 8, **characterised in that** the scanning of the surface (1a) of the part (1) is carried out along a trajectory consisting of parallel lines joined together at their ends, in a crenellated or comb shape.

10. Process according to any one of claims 1 to 9, **characterised in that** the signals are obtained from the detector, in the first direction, during a first full sweep of the surface (1a) of the part (1), then in the second direction during a second full sweep of the surface (1a) of the part (1).

11. Process according to any one of claims 1 to 9, **characterised in that** the signals are obtained from the detector, for each of the scanning lines, in the first direction of scanning, then in the second direction of scanning of the surface (1a) of the part (1).

12. Process according to any one of claims 1 to 11, **characterised in that** the heating of the part (1) and the detection of the signals are carried out continuously.

13. Process according to any one of claims 1 to 11, **characterised in that** the heating of the part (1) and the detection of the signals are carried out in modulated manner.

14. Process according to any one of claims 1 to 13, **characterised in that** at least one of the parameters, the area of the heating zone (2) or the detection zone (3), the shape of the heating zone (2) or the detection zone (3), the spatial distribution of the heating power, the spatial distribution of the detection sensitivity, is modified between the scanning in the first direction of movement and the scanning in the second direction of movement, in order to improve the significant nature of the differential signals.

15. Process according to any one of claims 1 to 14, **characterised in that** heat is supplied to at least two heating zones (2) of the surface (1a) of the part (1) and the measuring signals are detected in a detection zone (3) located between the heating zones (2).

16. Process according to any one of claims 1 to 15, **characterised in that** heat is supplied to an annular heating zone (2) of the part (1) and the measuring signals are detected in a detection zone (3) located inside the annular heating zone (2).

## Patentansprüche

1. Verfahren zum photothermischen Untersuchen eines Gegenstandes (1) durch
Abtasten einer Oberfläche (1a) des Gegenstandes (1) durch eine Wärmeaufnahmevorrichtung (11) zur Aufnahme der Wärme des Gegenstandes (1) in wenigstens einem Heizbereich (2), der auf der Oberfläche des Gegenstandes verschoben wird,
Erfassen des Strahlungsflusses von der Oberfläche (1a) des Gegenstandes (1) mit wenigstens einem Detektor (12) in wenigstens einem Detektionsbereich (3), dessen Position auf der Oberfläche (1a) des Gegenstandes (1) gemeinsam mit der Position des Heizbereiches (2) verändert wird, und
Ermitteln eines Signals bei jeder Position in einer Folge von aufeinanderfolgenden Positionen des Erfassungsbereiches (3) mit dem Detektor (12), das den thermischen Strahlungsfluss oder den Anstieg der Temperatur in dem Detektionsbereich wiedergibt,
**dadurch gekennzeichnet, dass**
das Abtasten der Oberfläche (1a) des Gegenstandes (1) auf einer vorgegebenen Trajektorie in einer ersten Verschiebungsrichtung und anschließend in einer zweiten Verschiebungsrichtung entgegen der ersten mit einer identischen Abtastgeschwindigkeit erfolgt und
bei jeder von aufeinanderfolgenden Positionen des Detektionsbereichs (3) ein Differenzsignal durch Subtraktion der Signale erzeugt wird, die sich beim Abtasten in der einen und der anderen Richtung der Oberfläche (1a) des Gegenstandes (1) ergeben, und der Fehlerzustand oder die Eigenschaften des Materials des Gegenstandes (1) aufgrund der sich ergebenden Differenzsignale bestimmt wird.

2. Verfahren nach Anspruch 1,
**dadurch gekennzeichnet, dass**
der Heizbereich (2) und der Detektionsbereich (3) einen Abstand (d) auf der Oberfläche (1a) des Gegenstandes (1) haben, der konstant ist und durch einen Vektor dargestellt wird, dessen Komponenten in einem kartesischen Koordinatensystem positiv, negativ, oder null sein können.

3. Verfahren nach Anspruch 2,
**dadurch gekennzeichnet, dass**
der Abstand (d) zwischen dem Heizbereich (2) und dem Detektionsbereich (3) zwischen null und 10 mm liegt.

4. Verfahren nach Anspruch 2 oder 3,
**dadurch gekennzeichnet, dass**
der räumliche Abstand (d) zwischen dem Heizbereich (2) und dem Detektionsbereich (3) der gleiche bei der Abtastung in einer Richtung und der anderen Richtung der Oberfläche (1a) des Gegenstandes (1) ist.

5. Verfahren nach Anspruch 2 oder 3,
**dadurch gekennzeichnet, dass**
der räumliche Abstand (d) zwischen dem Heizbereich (2) und dem Detektionsbereich (3) das Vorzeichen oder die Amplitude zwischen der Abtastung in der ersten Verschiebungsrichtung und der Abtastung in der zweiten Verschiebungsrichtung wechselt.

6. Verfahren nach einem der Ansprüche 1 bis 5,
**dadurch gekennzeichnet, dass**
der Flächeninhalt des Heizbereiches (2) und des Detektionsbereiches (3) zwischen 1µm² und 1000mm² liegt.

7. Verfahren nach Anspruch 6,
**dadurch gekennzeichnet, dass**
der Flächeninhalt des Heizbereichs (2) sich von dem Flächeninhalt des Detektionsbereichs (3) unterscheidet.

8. Verfahren nach einem der Ansprüche 1 bis 7,
**dadurch gekennzeichnet, dass**
aufgrund von Differenzsignalen ein Bild der Oberfläche erstellt wird, das Fehler des Materials wie zum Beispiel Risse zeigt.

9. Verfahren nach einem der Ansprüche 1 bis 8,
**dadurch gekennzeichnet, dass**
das Abtasten der Oberfläche (1a) des Gegenstandes (1) entlang einer Trajektorie erfolgt, die durch parallele Linien gebildet wird, welche an ihren Enden zinnenförmig oder kammartig miteinander verbunden sind.

10. Verfahren nach einem der Ansprüche 1 bis 9,
**dadurch gekennzeichnet, dass**
Detektionssignale in der ersten Richtung im Verlauf einer vollständigen ersten Abtastung der Oberfläche (1a) des Gegenstandes (1) und dann in der zweiten Richtung im Verlauf einer vollständigen Abtastung der Oberfläche (1a) des Gegenstandes (1) gesammelt werden.

11. Verfahren nach einem der Ansprüche 1 bis 9,
**dadurch gekennzeichnet, dass**
das Sammeln von Detektionssignalen für jede der Abtastlinien in der ersten Richtung des Abtastens und dann in der zweiten Richtung des Abtastens der Oberfläche (1a) des Gegenstandes (1) erfolgt.

12. Verfahren nach einem der Ansprüche 1 bis 11,
**dadurch gekennzeichnet, dass**
das Heizen des Gegenstandes (1) und das Erfassen von Signalen kontinuierlich erfolgt.

13. Verfahren nach einem der Ansprüche 1 bis 11,
**dadurch gekennzeichnet, dass**
das Heizen des Gegenstandes (1) und das Erfassen von Signalen moduliert erfolgt.

14. Verfahren nach einem der Ansprüche 1 bis 13,
**dadurch gekennzeichnet, dass**
wenigstens einer der Parameter Flächeninhalt des Heizbereichs (2) oder des Detektionsbereiches (3), Form des Heizbereichs (2) oder des Detektionsbereichs (3), räumliche Verteilung der Heizleistung, räumliche Verteilung der Detektionsempfindlichkeit zwischen der Abtastung in der ersten Verschiebungsrichtung und der Abtastung in der zweiten Verschiebungsrichtung modifiziert wird, um die signifikante Eigenschaft von Differenzsignalen zu verbessern.

15. Verfahren nach einem der Ansprüche 1 bis 14,
**dadurch gekennzeichnet, dass**
eine Wärmeaufnahme in wenigstens zwei Heizbereichen (2) der Oberfläche (1a) des Gegenstandes (1) und die Erfassung von Messsignalen in einer Erfassungszone (3) zwischen den Heizbereichen (2) erfolgt.

16. Verfahren nach einem der Ansprüche 1 bis 15,
**dadurch gekennzeichnet, dass**
eine Wärmeaufnahme in einem kreisförmigen Heizbereich (2) des Gegenstandes (1) und die Erfassung von Signalen in einem Detektionsbereich (3) innerhalb des kreisförmigen Heizbereichs (2) erfolgt.
